# EUROPÄISCHE PATENTSCHRIFT

(11) **EP 3 044 650 B1**
(45) Veröffentlichungstag und Bekanntmachung des Hinweises auf die Patenterteilung: **22.11.2017**
(21) Anmeldenummer: 14772066.8
(22) Anmeldetag: 11.09.2014
(51) Int. Cl.: G06F 3/01, B60K 35/00, G06F 3/14

(54) **VERFAHREN UND SYSTEM ZUM BETREIBEN EINER MEHRZAHL VON ANZEIGEEINRICHTUNGEN EINES KRAFTWAGENS SOWIE KRAFTWAGEN MIT EINEM SYSTEM ZUM BETREIBEN EINER MEHRZAHL VON ANZEIGEEINRICHTUNGEN**
METHODS AND SYSTEM FOR OPERATING A PLURALITY OF DISPLAY DEVICES OF A MOTOR VEHICLE AND MOTOR VEHICLE HAVING A SYSTEM FOR OPERATING A PLURALITY OF DISPLAY DEVICES
PROCÉDÉ ET SYSTÈME POUR FAIRE FONCTIONNER UNE PLURALITÉ DE DISPOSITIFS AFFICHEURS DANS UN VÉHICULE AUTOMOBILE AINSI QUE VÉHICULE AUTOMOBILE ÉQUIPÉ D'UN SYSTÈME PERMETTANT DE FAIRE FONCTIONNER UNE PLURALITÉ DE DISPOSITIFS AFFICHEURS

(30) Priorität: 13.09.2013 DE 102013015205
(43) Veröffentlichungstag der Anmeldung: 20.07.2016
(73) Patentinhaber: Audi AG, 85045 Ingolstadt (DE)
(72) Erfinder: KÜHNE, Marcus, 92339 Beilngries (DE); MÜLLER, Ulrich, 85055 Ingolstadt (DE)
(86) Internationale Anmeldenummer: PCT/EP2014/002456
(87) Internationale Veröffentlichungsnummer: WO 2015/036117

(56) Entgegenhaltungen:
- DE-A1-102006 050 016
- US-A1- 2010 238 280
- US-A1- 2012 215 403

## Beschreibung

Die Erfindung betrifft ein Verfahren und System zum Betreiben einer Mehrzahl von Anzeigeeinrichtungen eines Kraftwagens der in den Oberbegriffen der Patentansprüchen angegebenen Art. Des Weiteren betrifft die Erfindung einen Kraftwagen mit einem derartigen System zum Betreiben einer Mehrzahl von Anzeigeeinrichtungen.

Die DE 10 2012 006 966 A1 zeigt ein Verfahren zum Auslösen einer fahrzeugseitig ausführbaren Funktion mittels blickgesteuerten Bedienens durch einen Fahrer des Kraftfahrzeugs. Mittels einer Blickerfassungseinrichtung wird überprüft, ob der Fahrer seinen Blick auf einen bestimmten Bereich einer Anzeigefläche eines Bedienfelds gerichtet hat. Falls eine derartige Blickzuwendung ermittelt worden ist, wird eine zu dem Bedienfeld gehörende fahrzeugseitig ausführbare Funktion ausgeführt. Die Anzeigefläche kann dabei deaktiviert werden, sobald eine Blickabwendung von der entsprechenden Anzeigefläche erfasst worden ist.

Die DE 10 2007 049 710 A1 zeigt ein Verfahren zum visuellen Auslösen von Vorgängen in einem Kraftfahrzeug. Sobald erfasst worden ist, dass ein Fahrzeuginsasse seinen Blick für eine vorgegebene Dauer auf ein Bedienelement des Kraftfahrzeugs gerichtet hat, wird das Bedienelement automatisch ausgelöst.

Die DE 101 21 392 A1 zeigt eine Vorrichtung zur Steuerung von Geräten mittels Blickrichtung. In Abhängigkeit einer erfassten Blickrichtung kann eine Steuerfunktion ausgewählt werden, welche mittels eines Bedienelements, das vorzugsweise an einem Lenkrad angeordnet ist, ausgeführt werden kann.

Die EP 1 562 102 A2 zeigt ein Kraftfahrzeug mit einer Funktionsauslösung durch eine Blickauswahl. Ein Bedienelement kann aktiviert werden, sobald eine Blickzuwendung eines Fahrzeuginsassen zu dem Bedienelement erfasst worden ist.

Die DE 10 2007 025 531 A1 zeigt ein blickrichtungsgesteuertes Anzeigesystem und blickrichtungsgesteuertes Anzeigeverfahren für ein Kraftfahrzeug. In Abhängigkeit von einer erfassten Blickrichtungsdauer können dabei jeweils angezeigte Informationen verändert werden.

Die US 2010/238280 A1 zeigt ein Verfahren zum Betreiben einer Mehrzahl von Anzeigeeinrichtungen eines Kraftwagens, wobei eine Blickrichtung eines Fahrers des Kraftwagens erfasst wird. Anhand der erfassten Blickrichtung wird überprüft, ob der Fahrer seinen Blick für zumindest eine vorgegebene Blickzuwendungsdauer auf die jeweiligen Anzeigeeinrichtungen gerichtet hat. Falls der Blick für zumindest die vorgegebene Blickzuwendungsdauer auf einen Anzeigebereich einer Anzeigeeinrichtung gerichtet worden ist, wird eine grafische Benutzeroberfläche bei der betreffenden Anzeigeeinrichtung angezeigt und eine Hand des Fahrers ebenfalls noch auf dieser Anzeigeeinrichtung angezeigt, welche beispielsweise auf einem Touch-Pad des Kraftwagens ruht. Der Fahrer kann somit, ohne seinen Blick auf das Touch-Pad richten zu müssen, immer erkennen, wie er seine Hand beziehungsweise seine Finger bewegen muss, um die angezeigte grafische Benutzeroberfläche und somit entsprechende Funktionen des Kraftwagens zu steuern.

Es ist die Aufgabe der vorliegenden Erfindung, das blickrichtungsabhängige Betreiben einer Mehrzahl von Anzeigeeinrichtungen eines Kraftwagens zu verbessern.

Diese Aufgabe wird durch ein Verfahren und System zum Betreiben einer Mehrzahl von Anzeigeeinrichtungen eines Kraftwagens mit den Merkmalen der unabhängigen Patentansprüche sowie durch einen Kraftwagen mit einem System zum Betreiben einer Mehrzahl von Anzeigeeinrichtungen gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben einer Mehrzahl von Anzeigeeinrichtungen wird eine Blickrichtung eines Fahrers des Kraftwagens erfasst. Anhand der erfassten Blickrichtung wird überprüft, ob der Fahrer seinen Blick für zumindest eine vorgegebene Blickzuwendungsdauer auf einen Anzeigebereich der Anzeigeeinrichtungen gerichtet hat. Falls der Blick für zumindest die vorgegebene Blickzuwendungsdauer auf einen der Anzeigebereiche von einer der Anzeigeeinrichtungen gerichtet worden ist, wird ein Interaktionsmodus aktiviert, bei welchem eine Bedieneinrichtung zum Steuern der betreffenden Anzeigeeinrichtung aktiviert ist. Das erfindungsgemäße Verfahren zeichnet sich dadurch aus, dass für zumindest eine der Anzeigeeinrichtungen eine erweiterte Blickzuwendungsdauer vorgegeben wird, welche länger als die vorgegebene Blickzuwendungsdauer ist. Das Aktivieren des Interaktionsmodus bei dieser Anzeigeeinrichtung erfolgt erst dann, falls erfasst worden ist, dass der Blick des Fahrers für zumindest die erweiterte Blickzuwendungsdauer auf den Anzeigebereich dieser Anzeigeeinrichtung gerichtet worden ist.

Es ist also erfindungsgemäß vorgesehen, für zumindest eine der Anzeigeeinrichtungen eine verlängerte Blickzuwendungsdauer vorzugeben, wodurch eine Aktivierung des betreffenden Interaktionsmodus für diese Anzeigeeinrichtung erst erfolgt, wenn der Fahrer seinen Blick für zumindest die verlängerte Blickzuwendungsdauer auf den betreffenden Anzeigebereich der Anzeigeeinrichtung gerichtet haben sollte. Dadurch, dass zumindest zwei unterschiedlich lange Blickzuwendungsdauern vorgegeben werden, kann die blickrichtungsabhängige Aktivierung der betreffenden Interaktionsmodi an ein gängiges Blickverhalten des Fahrers angepasst werden. Die blickrichtungsabhängige Interaktion mit den betreffenden Anzeigeeinrichtungen wird dadurch robuster, da die Wahrscheinlichkeit eines versehentlichen Aufschaltens bzw. Aktivierens des Interaktionsmodus der Anzeigeeinrichtung mit der verlängerten Blickzuwendungsdauer erheblich reduziert werden kann.

Bei dem erfindungsgemäßen Verfahren wird im jeweiligen Interaktionsmodus nicht alleine die betreffende Anzeigeeinrichtung selbst gesteuert. Die jeweiligen Anzeigeeinrichtungen dienen als Benutzerschnitte für eine oder mehrere unterschiedliche Funktionen des Kraftwagens, beispielsweise in Form eines Bordcomputers, einer Navigationseinrichtung, eines Radios oder dergleichen. Der Fahrer kann also in dem Interaktionsmodus, sofern er aktiviert ist, die Bedieneinrichtung zum Steuern jeweiliger Fahrzeugfunktionen über die entsprechende Anzeigeeinrichtung verwenden, wobei die betreffende Anzeigeeinrichtung die Steuermöglichkeiten und die gegebenenfalls durchgeführten Steuerungen visualisiert.

Zudem ist es erfindungsgemäß vorgesehen, dass die erweiterte Blickzuwendungsdauer nur für diejenige Anzeigeeinrichtung vorgegeben wird, deren Anzeigebereich vollständig oberhalb einer Unterkante einer Windschutzscheibe des Kraftwagens angeordnet ist. Vorzugsweise wird die erweiterte Blickzuwendungsdauer für eine als Head-up-Display ausgebildete Anzeigeeinrichtung des Kraftwagens vorgegeben. Der Blick eines Fahrers wandert üblicherweise relativ häufig über die Windschutzscheibe und somit auch über einen Anzeigebereich eines Head-up-Displays, ohne dass der Fahrer eine Interaktion mit dem Head-up-Display selbst wünscht. Dadurch, dass die erweiterte Blickzuwendungsdauer für das Head-up-Display vorgegeben wird, wird eine versehentliche bzw. unerwünschte Aufschaltung des Interaktionsmodus für das Head-up-Display vermieden. Der Fahrer kann also durch die Windschutzscheibe des Kraftwagens schauen und dabei auch seinen Blick auf den Anzeigebereich des Head-up-Displays richten, ohne dass der Interaktionsmodus des Head-up-Displays unmittelbar aktiviert wird.

Des Weiteren ist es erfindungsgemäß vorgesehen, dass eine mittlere Blickzuwendungsdauer, welche länger als die vorgegebene Blickzuwendungsdauer und kürzer als die erweiterte Blickzuwendungsdauer ist, für diejenige Anzeigeeinrichtung vorgegeben wird, deren Anzeigebereich nur teilweise oberhalb einer Unterkante einer Windschutzscheibe angeordnet ist. Vorzugsweise wird die mittlere Blickzuwendungsdauer für eine oberhalb einer Mittelkonsole des Kraftwagens angeordnete Anzeigeeinrichtung vorgegeben. Es kann durchaus sein, dass der Blick des Fahrers beim durch die Windschutzscheibe schauen auch über den betreffenden Anzeigebereich der oberhalb der Mittelkonsole des Kraftwagens angeordneten Anzeigeeinrichtung wandert, ohne dass der Fahrer eine Interaktion mit der betreffenden Anzeigeeinrichtung wünscht. Dadurch, dass für diese Anzeigeeinrichtung eine etwas verlängerte Blickzuwendungsdauer in Form der mittleren Blickzuwendungsdauer vorgegeben wird, wird unterbunden, dass ohne dass der Fahrer tatsächlich eine Interaktion mit der betreffenden Anzeigeeinrichtung im Bereich der Mittelkonsole des Kraftwagens wünscht, der entsprechende Interaktionsmodus aktiviert wird.

Eine weitere vorteilhafte Ausführungsform der Erfindung sieht vor, dass die vorgegebene Blickzuwendungsdauer für eine als Kombiinstrument ausgebildete Anzeigeeinrichtung vorgegeben wird. Mit anderen Worten wird die kürzeste Blickzuwendungsdauer, welche detektiert werden muss, bevor der betreffende Interaktionsmodus aktiviert wird, für das Kombiinstrument vorgegeben. Denn üblicherweise blickt der Fahrer bewusst und auch länger in den betreffenden Anzeigebereich des Kombiinstruments, falls er tatsächlich eine Interaktion mit dem Kombiinstrument wünschen sollte.

Eine weitere vorteilhafte Ausführungsform der Erfindung sieht vor, dass die jeweiligen Blickzuwendungsdauern in Abhängigkeit von einer Fahrgeschwindigkeit des Kraftwagens verändert werden. Mit anderen Worten können die entsprechenden Blickzuwendungsdauern also sowohl für das Head-up-Display, der in der im Bereich der Mittelkonsole des Kraftwagens angeordneten Anzeigeeinrichtung als auch für das Kombiinstrument in Abhängigkeit der Fahrgeschwindigkeit des Kraftwagens verändert werden. Sollte der Fahrer den Kraftwagen beispielsweise bei einer relativ hohen Verkehrsdichte sehr schnell über eine Autobahn bewegen, wird der Fahrer beispielsweise nach einer Blickzuwendung zum Anzeigebereich des Kombiinstruments relativ schnell wieder durch die Windschutzscheibe blicken und gegebenenfalls auch den Anzeigebereich des Head-up-Displays zumindest kurzzeitig fokussieren. Durch eine entsprechende Anpassung der jeweiligen Blickzuwendungsdauern kann die blickrichtungsabhängige Interaktion mit den jeweiligen Anzeigebereichen bzw. Anzeigeeinrichtungen verbessert werden.

Das erfindungsgemäße System zum Betreiben einer Mehrzahl von Anzeigeeinrichtungen eines Kraftwagens umfasst eine Blickerfassungseinrichtung, welche dazu ausgelegt ist, die Blickrichtung eines Fahrers des Kraftwagens zu erfassen und anhand der erfassten Blickrichtung zu überprüfen, ob der Fahrer seinen Blick für zumindest eine vorgegebene Blickzuwendungsdauer auf einen Anzeigebereich der Anzeigeeinrichtungen gerichtet hat. Das System umfasst des Weiteren eine Steuereinrichtung, welche dazu ausgelegt ist, bei einer festgestellten Blickzuwendung des Fahrers für zumindest die vorgegebene Blickzuwendungsdauer auf einen der Anzeigebereiche von einer der Anzeigeeinrichtungen einen Interaktionsmodus zu aktivieren, bei welchem eine Bedieneinrichtung des Systems zum Steuern der betreffenden Anzeigeeinrichtung aktiviert ist. Das erfindungsgemäße System zeichnet sich dabei dadurch aus, dass die Steuereinrichtung dazu ausgelegt ist, für zumindest eine der Anzeigeeinrichtungen eine erweiterte Blickzuwendungsdauer vorzugeben, welche länger als die vorgegebene Blickzuwendungsdauer ist, wobei die Steuereinrichtung dazu ausgelegt ist, die erweiterte Blickzuwendungsdauer nur für diejenige Anzeigeeinrichtung vorzugeben, deren Anzeigebereich vollständig oberhalb einer Unterkante einer Windschutzscheibe des Kraftwagens angeordnet ist. Die Steuereinrichtung ist erfindungsgemäß dabei dazu ausgelegt, den Interaktionsmodus bei dieser Anzeigeeinrichtung erst dann zu aktivieren, falls erfasst worden ist, dass der Blick des Fahrers für zumindest die erweiterte Blickzuwendungsdauer auf den Anzeigebereich dieser Anzeigeeinrichtung gerichtet worden ist. Ferner ist die Steuereinrichtung dazu ausgelegt, eine mittlere Blickzuwendungsdauer, welche länger als die vorgegebene Blickzuwendungsdauer und kürzer als die erweiterte Blickzuwendungsdauer ist, für diejenige Anzeigeeinrichtung vorzugeben, deren Anzeigebereich nur teilweise oberhalb einer Unterkante einer Windschutzscheibe des Kraftwagens angeordnet ist. Vorteilhafte Ausgestaltungen des erfindungsgemäßen Verfahrens sind dabei als vorteilhafte Ausgestaltungen des Systems anzusehen, wobei das System insbesondere Mittel zur Durchführung der Verfahrensschritte umfasst.

Der erfindungsgemäße Kraftwagen umfasst das erfindungsgemäße System zum Betreiben einer Mehrzahl von Anzeigeeinrichtungen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

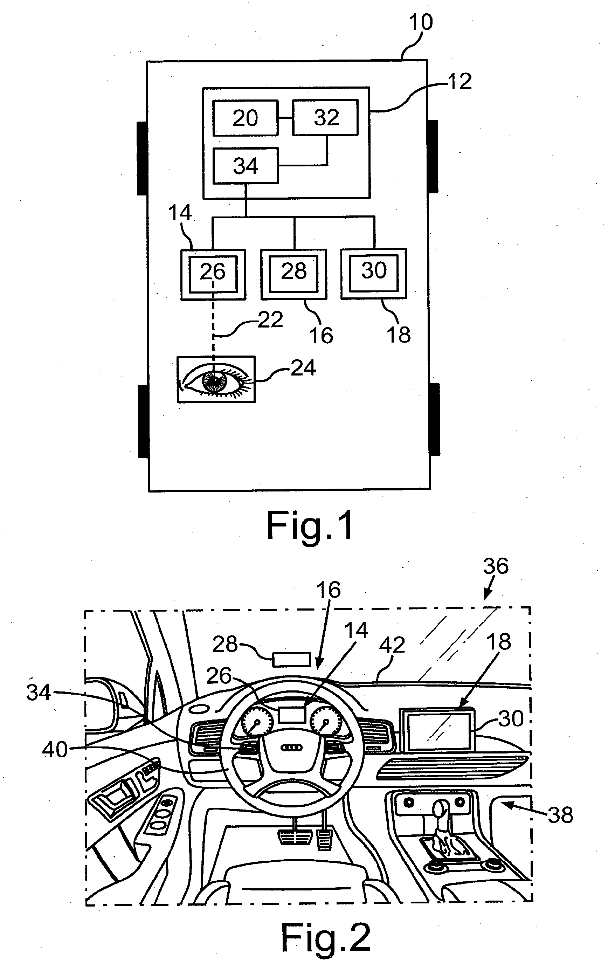

- Fig. 1: eine schematische Darstellung eines Kraftwagens mit einem System zum Betreiben einer Mehrzahl von Anzeigeeinrichtungen, wobei das System eine Blickerfassungseinrichtung zur Erfassung einer Blickrichtung eines Fahrers des Kraftwagens und eine Steuereinrichtung sowie eine Bedieneinrichtung zum Steuern der jeweiligen Anzeigeeinrichtungen umfasst; und in
- Fig. 2: eine Perspektivansicht auf ein teilweise dargestelltes Cockpit des Kraftwagens, wobei die Anzeigeeinrichtungen als Kombiinstrument, als Head-up-Display bzw. als Display oberhalb einer Mittelkonsole des Kraftwagens ausgebildet sind.

Ein Kraftwagen 10 mit einem System 12 zum Betreiben einer Mehrzahl von Anzeigeeinrichtungen 14, 16, 18 ist in einer schematischen Darstellung in Fig. 1 gezeigt. Das System 12 umfasst eine Blickerfassungseinrichtung 20, welche dazu ausgelegt ist, eine mit der gestrichelten Linie gekennzeichnete Blickrichtung 22 eines Fahrers 24 des Kraftwagens 10 zu erfassen und anhand der erfassten Blickrichtung 22 zu überprüfen, ob der Fahrer 24 seinen Blick für zumindest eine vorgegebene Blickzuwendungsdauer auf einen der Anzeigebereiche 26, 28, 30 der Anzeigeeinrichtungen 14, 16, 18 gerichtet hat. Die Blickerfassungseinrichtung 20 kann beispielsweise als Kamerasystem mit einer oder mehreren Kameras ausgebildet sein, welche im Innenraum des Kraftwagens 10 angeordnet sind, mittels welchen die Blickrichtung 22 des Fahrers 24 erfassbar ist.

Das System 12 umfasst des Weiteren eine Steuereinrichtung 32, welche dazu ausgelegt ist, bei einer festgestellten Blickzuwendung des Fahrers 24 für die zumindest vorgegebene Blickzuwendungsdauer auf einen der Anzeigebereiche 26, 28, 30 von einer der Anzeigeeinrichtungen 14, 16, 18 einen Interaktionsmodus zu aktivieren, bei welchem eine Bedieneinrichtung 34 zum Steuern der betreffenden Anzeigeeinrichtung 14, 16, 18 aktiviert ist. Die Steuereinrichtung 32 ist dabei mit der Blickerfassungseinrichtung 20 gekoppelt, so dass ein entsprechender Informationsfluss von der Blickerfassungseinrichtung 20 zu der Steuereinrichtung 32 gewährleistet ist.

Die Steuereinrichtung 32 ist dazu ausgelegt, für zumindest eine der Anzeigeeinrichtungen 14, 16, 18 eine erweiterte Blickzuwendungsdauer vorzugeben, welche länger als die vorgegebene Blickzuwendungsdauer ist. Die Steuereinrichtung 32 ist dazu ausgelegt, den Interaktionsmodus bei dieser Anzeigeeinrichtung 14, 16, 18 erst dann zu aktiveren, falls erfasst worden ist, dass der Blick des Fahrers 24 für zumindest die erweiterte Blickzuwendungsdauer auf den Anzeigebereich 26, 28, 30 dieser Anzeigeeinrichtung 14, 16 ,18 gerichtet worden ist.

In Fig. 2 ist in einer Perspektivansicht ein Ausschnitt eines Cockpits 36 des Kraftwagens 10 dargestellt. Bei der Anzeigeeinrichtung 14 handelt es sich vorliegend um ein Kombiinstrument des Kraftwagens 10, bei der Anzeigeeinrichtung 16 um ein Head-up-Display des Kraftwagens 10 und bei der Anzeigeeinrichtung 18 um ein Display, welches oberhalb von einer Mittelkonsole 38 des Kraftwagens 10 angeordnet ist. Die Bedieneinrichtung 34 ist vorliegend als walzenförmige Bedieneinrichtung ausgebildet, welche an einem Lenkrad 40 des Kraftwagens 10 angeordnet ist.

Nachfolgend wird ein Verfahren zum Betreiben der Anzeigeeinrichtung 14, 16, 18 erläutert. Mittels der Blickerfassungseinrichtung 20 wird fortlaufend die Blickrichtung 22 des Fahrers 24 erfasst. Anhand der erfassten Blickrichtung 22 wird überprüft, ob der Fahrer 24 seinen Blick für zumindest eine vorgegeben Blickzuwendungsdauer auf den Anzeigebereich 26 des Kombiinstruments 14, für eine erweiterte Blickzuwendungsdauer auf den Anzeigebereich 28 des Head-up-Displays 16 oder für eine mittlere Blickzuwendungsdauer auf den Anzeigebereich 30 des Displays 18 gerichtet hat. Die mittlere Blickzuwendungsdauer ist dabei kürzer als die erweiterte Blickzuwendungsdauer und länger als die vorgegebene Blickzuwendungsdauer.

Die erweiterte Blickzuwendungsdauer ist also nur für das Head-up-Display 16 vorgegeben, deren Anzeigebereich 28 vollständig oberhalb einer mit der gestrichelten Linie 42 gekennzeichneten Unterkante einer nicht näher bezeichneten Windschutzscheibe des Kraftwagens 10 angeordnet ist. Der Anzeigebereich 30 des Displays 18 ist dabei vorliegend nur teilweise oberhalb der Unterkante 42 der Windschutzscheibe des Kraftwagens 10 angeordnet.

Nachfolgend wird zunächst davon ausgegangen, dass der Fahrer 24 seinen Blick für die vorgegeben Blickzuwendungsdauer auf den Anzeigebereich 26 des Kombiinstruments 16 gerichtet hat. Sobald dies anhand der erfassten Blickrichtung des Fahrers 24 erfasst worden ist, wird derjenige Interaktionsmodus aktiviert, bei welchem die Bedieneinrichtung 34 zum Steuern des Kombiinstruments 14 ausgelegt ist. Sobald dieser Interaktionsmodus für das Kombiinstrument 14 aktiviert worden ist, kann der Fahrer durch einen entsprechende Betätigung der Bedieneinrichtung 34 das Kombiinstrument 14 und entsprechend angezeigte Inhalte innerhalb des Anzeigebereichs 26 steuern. Das Kombiinstrument 14 dient dabei als graphische Benutzerschnittstelle zur Ansteuerung von beispielsweise einem Radio, einem Bordcomputer, einer Navigationseinheit oder anderen Funktionseinheiten des Kraftwagens 10.

Wendet nun der Fahrer 24 nach einer Aktivierung des betreffenden Interaktionsmodus für das Kombiinstrument 14 anschließend seinen Blick von dem Kombiinstrument 14 bzw. dem Anzeigebereich 26 des Kombiinstruments 14 ab, um beispielsweise durch die Windschutzscheibe des Kraftwagens 10 kurzzeitig das Verkehrsgeschehen zu beobachten und streift dabei mit seinem Blick den Anzeigebereich 28 des Head-up-Displays, wird nicht automatisch der Interaktionsmodus für das Head-up-Display 16 aktiviert. Denn wie bereits erwähnt, ist für das Head-up-Display 16 eine erweiterte Blickzuwendungsdauer vorgegeben, welche länger als die vorgegeben Blickzuwendungsdauer für das Kombiinstrument 14 ist. Beispielsweise kann die erweiterte Blickzuwendungsdauer doppelt so lang wie die vorgegebene Blickzuwendungsdauer für das Kombiinstrument 14 vorgegeben sein, so dass der Fahrer 24 seinen Blick beispielsweise für 3 Sekunden auf den Anzeigebereich 28 richten muss, bevor der Interaktionsmodus für das Head-up-Display 16 überhaupt aktiviert wird, wohingegen der Fahrer 24 seinen Blick nur für 1,5 Sekunden auf den Anzeigebereich 26 des Kombiinstruments 14 richten muss, bis der Interaktionsmodus für das Kombiinstrument 14 aktiviert wird.

Der Fahrer kann also nach einer blickrichtungsgesteuerten Aktivierung des betreffenden Interaktionsmodus für das Kombiinstrument 14 durchaus durch die Windschutzscheibe und auch auf den Anzeigebereich 28 des Kombiinstruments für eine kurze Zeitdauer blicken, ohne dass der Interaktionsmodus für das Kombiinstrument 14 beendet wird.

Sollte der Fahrer 24 hingegen seinen Blick länger als für die besagten beispielsweise 3 Sekunden auf den Anzeigebereich 28 des Head-up-Displays 16 richten, so bewirkt die Steuereinrichtung 32, dass der betreffende Interaktionsmodus für das Head-up-Display 16 aktiviert und der Interaktionsmodus für das Kombiinstrument 14 beendet wird. Anschließend kann der Fahrer 24 durch entsprechende Betätigungen der Bedieneinrichtung 34 das Head-up-Display 16 ansteuern, wobei das Head-up-Display 16 wiederum als graphische Benutzerschnittstelle zur Ansteuerung verschiedenster Funktionen des Kraftwagens 10, wie beispielsweise die Navigationseinrichtung, das Radio, den Bordcomputer oder dergleichen dient.

Wird nach der Aktivierung des Interaktionsmodus für das Head-up-Display 16 festgestellt, dass der Fahrer 24 danach seinen Blick für die mittlere Blickzuwendungsdauer, welche kürzer als die erweiterte Blickzuwendungsdauer für das Head-up-Display 16 und länger als die vorgegebene Blickzuwendungsdauer für das Kombiinstrument 14 ist, auf den Anzeigebereich 30 des Displays 18 gerichtet hat, so wird wiederum der Interaktionsmodus für das Head-up-Display 16 beendet bzw. deaktiviert und der entsprechende Interaktionsmodus für das Display 18 aktiviert, bei welchem der Fahrer 24 wiederum durch eine entsprechende Bedienung der Bedieneinrichtung 34 das Display 18 steuern kann. In diesem Fall dient dann das Display 18 wiederum als graphische Benutzerschnittstelle zur Steuerung entsprechender Funktionseinheiten des Kraftwagens, beispielsweise des Navigationssystems, des Radios, des Bordcomputers oder dergleichen.

Jeweilige Interaktionsmodi für die unterschiedlichen Anzeigeeinrichtungen 14, 16, 18 können also blickrichtungsgesteuert aktiviert werden, wobei die erforderlichen Blickzuwendungsdauern, welche erfasst worden sein müssen, bevor die entsprechenden Interaktionsmodi aktiviert werden, für die unterschiedlichen Anzeigeeinrichtungen 14, 16, 18 unterschiedlich lang vorgegeben sind. Die jeweils erforderlichen Blickzuwendungsdauern sind dabei derart angepasst, dass sie den üblichen Blickzuwendungsdauern des Fahrers 24 Rechnung tragen, welche für im vorliegenden Fall das Kombiinstrument 14, das Head-up-Display 16 und das Display 18 jeweils unterschiedlich sind.

Im vorliegenden Fall ist also die erforderliche Blickzuwendungsdauer zur Aktivierung des betreffenden Interaktionsmodus für das Head-up-Display 16 am längsten gewählt, da der Fahrer 24 üblicherweise seinen Blick sehr häufig durch die Windschutzscheibe des Kraftwagens 10 und somit auch auf den Anzeigebereich 28 des Head-up-Displays 16 richten wird, ohne dass der Fahrer 24 tatsächlich eine Interaktion mit dem Head-up-Display 16 wünscht. Auch ist es beim üblichen Sehverhalten des Fahrers 24 normalerweise häufig der Fall, dass der Fahrer 24 mit seinem Blick zumindest den Anzeigebereich 30 des Displays 18 oberhalb der Mittelkonsole 38 streift, ohne dass der Fahrer 24 tatsächlich eine Interaktion mit der Anzeigeeinrichtung 18 wünscht. Bei dem Kombiinstrument 14 stellt sich dies gegenüber dem Head-up-Display 16 und dem Display 18 anders dar, da der Fahrer 24 üblicherweise bewusst seinen Blick auf den Anzeigebereich 26 des Kombiinstruments 14 richten wird, wenn er eine entsprechende Interaktion wünschen sollte.

Durch das erläuterte Verfahren und System wird also eine besonders robuste blickrichtungsabhängige Ansteuerung der jeweiligen Anzeigeeinrichtung 14, 16, 18 ermöglicht, da in Abhängigkeit eines typischen Blickverhaltens des Fahrers 24 die jeweiligen Blickzuwendungsdauern derart unterschiedlich vorgegeben sind, dass die entsprechenden Interaktionsmodi üblicherweise auch erst dann aktiviert werden, wenn der Fahrer 24 dies tatsächlich wünschen sollte.

## Patentansprüche

1. Verfahren zum Betreiben einer Mehrzahl von Anzeigeeinrichtungen (14, 16, 18) eines Kraftwagens (10), mit den Schritten:
- Erfassen einer Blickrichtung (22) eines Fahrers (24) des Kraftwagens (10);
- Überprüfen anhand der erfassten Blickrichtung (22), ob der Fahrer (24) seinen Blick für zumindest eine vorgegebene Blickzuwendungsdauer auf einen Anzeigebereich (26, 28, 30) der Anzeigeeinrichtungen (14, 16, 18) gerichtet hat;
- falls der Blick für zumindest die vorgegebene Blickzuwendungsdauer auf einen der Anzeigebereiche (26, 28, 30) von einer der Anzeigeeinrichtungen (14, 16, 18) gerichtet worden ist: Aktivieren eines Interaktionsmodus, bei welchem eine Bedieneinrichtung (34) zum Steuern der betreffenden Anzeigeeinrichtung (14, 16, 18) aktiviert ist;
**dadurch gekennzeichnet, dass**
- für zumindest eine der Anzeigeeinrichtungen (16) eine erweiterte Blickzuwendungsdauer vorgegeben wird, welche länger als die vorgegebene Blickzuwendungsdauer ist, wobei die erweiterte Blickzuwendungsdauer nur für diejenige Anzeigeeinrichtung (16) vorgeben wird, deren Anzeigebereich (28) vollständig oberhalb einer Unterkante (42) einer Windschutzscheibe des Kraftwagens (10) angeordnet ist;
- das Aktivieren des Interaktionsmodus bei dieser Anzeigeeinrichtung (16) erst dann erfolgt, falls erfasst worden ist, dass der Blick des Fahrers (24) für zumindest die erweiterte Blickzuwendungsdauer auf den Anzeigebereich (28) dieser Anzeigeeinrichtung (16) gerichtet worden ist;
- eine mittlere Blickzuwendungsdauer, welche länger als die vorgegebene Blickzuwendungsdauer und kürzer als die erweiterte Blickzuwendungsdauer ist, für diejenige Anzeigeeinrichtung (18) vorgegeben wird, deren Anzeigebereich (30) nur teilweise oberhalb einer Unterkante (42) einer Windschutzscheibe des Kraftwagens (10) angeordnet ist.

2. Verfahren nach Anspruch 1,
**dadurch gekennzeichnet, dass**
die erweiterte Blickzuwendungsdauer für eine als Head-up-Display ausgebildete Anzeigeeinrichtung (16) des Kraftwagens (10) vorgegeben wird.

3. Verfahren nacheinem der vorhergehenden Ansprüche,
**dadurch gekennzeichnet, dass**
die mittlere Blickzuwendungsdauer für eine oberhalb einer Mittelkonsole (38) des Kraftwagens (10) angeordnete Anzeigeeinrichtung (18) vorgegeben wird.

4. Verfahren nach einem der vorhergehenden Ansprüche,
**dadurch gekennzeichnet, dass**
die vorgegebene Blickzuwendungsdauer für eine als Kombiinstrument ausgebildete Anzeigeeinrichtung (14) vorgegeben wird.

5. Verfahren nach einem der vorhergehenden Ansprüche,
**dadurch gekennzeichnet, dass**
die jeweiligen Blickzuwendungsdauern in Abhängigkeit von einer Fahrgeschwindigkeit des Kraftwagens (10) verändert werden.

6. System (12) zum Betreiben einer Mehrzahl von Anzeigeeinrichtungen (14, 16, 18) eines Kraftwagens (10), mit:
- einer Blickerfassungseinrichtung (20), welche dazu ausgelegt ist, eine Blickrichtung (22) eines Fahrers (24) des Kraftwagens (10) zu erfassen und anhand der erfassten Blickrichtung (22) zu überprüfen, ob der Fahrer (24) seinen Blick für zumindest eine vorgegebene Blickzuwendungsdauer auf einen Anzeigebereich (26, 28, 30) der Anzeigeeinrichtungen (14, 16, 18) gerichtet hat;
- einer Steuereinrichtung (32), welche dazu ausgelegt ist, bei einer festgestellten Blickzuwendung des Fahrers (24) für zumindest die vorgegebene Blickzuwendungsdauer auf einen der Anzeigebereiche (26, 28, 30) von einer der Anzeigeeinrichtungen (14, 16, 18) einen Interaktionsmodus zu aktiveren, bei welchem eine Bedieneinrichtung (34) des Systems (12) zum Steuern der betreffenden Anzeigeeinrichtung (14, 16, 18) aktiviert ist;
**dadurch gekennzeichnet, dass**
- die Steuereinrichtung (32) dazu ausgelegt ist, für zumindest eine der Anzeigeeinrichtungen (16) eine erweiterte Blickzuwendungsdauer vorzugeben, welche länger als die vorgegebene Blickzuwendungsdauer ist, wobei die Steuereinrichtung (32) dazu ausgelegt ist, die erweiterte Blickzuwendungsdauer nur für diejenige Anzeigeeinrichtung (16) vorzugeben, deren Anzeigebereich (28) vollständig oberhalb einer Unterkante (42) einer Windschutzscheibe des Kraftwagens (10) angeordnet ist;
- die Steuereinrichtung (32) dazu ausgelegt ist, den Interaktionsmodus bei dieser Anzeigeeinrichtung (16) erst dann zu aktivieren, falls erfasst worden ist, dass der Blick des Fahrers (24) für zumindest die erweiterte Blickzuwendungsdauer auf den Anzeigebereich (28) dieser Anzeigeeinrichtung (16) gerichtet worden ist;
- die Steuereinrichtung (32) dazu ausgelegt ist, eine mittlere Blickzuwendungsdauer, welche länger als die vorgegebene Blickzuwendungsdauer und kürzer als die erweiterte Blickzuwendungsdauer ist, für diejenige Anzeigeeinrichtung (18) vorzugeben, deren Anzeigebereich (30) nur teilweise oberhalb einer Unterkante (42) einer Windschutzscheibe des Kraftwagens (10) angeordnet ist.

7. Kraftwagen (10) mit einem System (12) nach Anspruch 6.

## Claims

1. Method of operating a plurality of display devices (14, 16, 18) of a motor vehicle (10), with the steps:
- detecting a viewing direction (22) of a driver (24) of the motor vehicle (10);
- verifying, based on the detected viewing direction (22), whether the driver (24) has directed his view for at least a predetermined viewing duration at a display region (26, 28, 30) of the display devices (14, 16, 18);
- if the view has been directed for at least the predetermined viewing duration at one of the display regions (26, 28, 30) of one of the display devices (14, 16, 18): activating an interaction mode in which an operating device (34) for controlling the display device (14, 16, 18) concerned is activated;
**characterised in that**
- an extended viewing duration is predetermined for at least one of the display devices (16) which is longer than the predetermined viewing duration wherein the extended viewing duration is predetermined only for the display device (16) whose display region (28) is arranged completely above a lower edge (42) of a windscreen of the motor vehicle (10);
- activating the interaction mode in this display device (16) then only takes place if it has been detected that the view of the driver (24) has been directed for at least the extended viewing duration at the display region (28) of this display device (16);
- an average viewing duration which is longer than the predetermined viewing duration and shorter than the extended viewing duration is predetermined for the display device (18) whose display region (30) is arranged only partially above a lower edge (42) of a windscreen of the motor vehicle (10).

2. Method according to claim 1,
**characterised in that**
the extended viewing duration is predetermined for a display device (16) of the motor vehicle (10) designed as a head-up display.

3. Method according to any one of the preceding claims,
**characterised in that**
the average viewing duration is predetermined for a display device (18) arranged above a centre console (38) of the motor vehicle (10).

4. Method according to any one of the preceding claims,
**characterised in that**
the predetermined viewing duration is predetermined for a display device (14) designed as an instrument cluster.

5. Method according to any one of the preceding claims,
**characterised in that**
the respective viewing durations are changed depending on a driving speed of the motor vehicle (10).

6. System (12) for operating a plurality of display devices (14, 16, 18) of a motor vehicle (10), with
- a view detection device (20) configured to detect a viewing direction (22) of a driver (24) of the motor vehicle (10) and to verify based on the detected viewing direction (22) whether the driver (24) has directed his view for at least a predetermined viewing duration at a display region (26, 28, 30) of the display devices (14, 16, 18).
- a control device (32) configured to activate an interaction mode when the view of the driver (24) is detected for at least the predetermined viewing duration at one of the display regions (26, 28, 30) of one of the display devices (14, 16, 18), in said interaction mode an operating device (34) of the system (12) is activated to control the display device (14, 16, 18) concerned;
**characterised in that**
- the control device (32) is configured to predetermine an extended viewing duration for at least one of the display devices (16) which is longer than the predetermined viewing duration wherein the control device (32) is configured to predetermine the extended viewing duration only for the display device (16) whose display region (28) is arranged completely above a lower edge (42) of a windscreen of the motor vehicle (10);
- the control device (32) is configured to only then activate the interaction mode of this display device (16) if it has been detected that the view of the driver (24) has been directed for at least the extended viewing duration at the display region (28) of this display device (16);
- the control device (32) is configured to predetermine an average viewing duration which is longer than the predetermined viewing duration and shorter than the extended viewing duration for the display device (18) whose display region (30) is arranged only partially above a lower edge (42) of a windscreen of the motor vehicle (10).

7. Motor vehicle (10) with a system (12) according to claim 6.

## Revendications

1. Procédé pour faire fonctionner une pluralité de dispositifs afficheurs (14, 16, 18) d'un véhicule automobile (10), avec les étapes de :
- détection d'une direction du regard (22) d'un conducteur (24) du véhicule automobile (10) ;
- contrôle à partir de la direction du regard (22) détectée, si le conducteur (24) a dirigé son regard pendant au moins une durée de direction du regard prédéfinie sur une zone d'affichage (26, 28, 30) des dispositifs afficheurs (14, 16, 18) ;
- si le regard a été dirigé pendant au moins la durée de direction du regard prédéfinie sur une des zones d'affichage (26, 28, 30) d'un des dispositifs afficheurs (14, 16, 18), activation d'un mode interactif, dans lequel un dispositif de service (34) est activé pour la commande du dispositif afficheur (14, 16, 18) concerné ;
**caractérisé en ce que**
- pour au moins un des dispositifs afficheurs (16), une durée de direction du regard étendue est prédéfinie, laquelle est plus longue que la durée de direction du regard prédéfinie, dans lequel la durée de direction du regard étendue est prédéfinie seulement pour le dispositif afficheur (16), dont la zone d'affichage (28) est agencée entièrement au-dessus d'une arête inférieure (42) d'un pare-brise du véhicule automobile (10) ;
- l'activation du mode interactif pour ce dispositif afficheur (16) n'a lieu que s'il a été détecté que le regard du conducteur (24) a été dirigé pendant au moins la durée de direction du regard étendue sur la zone d'affichage (28) de ce dispositif afficheur (16) ;
- une durée de direction du regard moyenne, laquelle est plus longue que la durée de direction du regard prédéfinie et plus courte que la durée de direction du regard étendue, est prédéfinie pour le dispositif afficheur (18), dont la zone d'affichage (30) n'est agencée que partiellement au-dessus d'une arête inférieure (42) d'un pare-brise du véhicule automobile (10).

2. Procédé selon la revendication 1,
**caractérisé en ce que**
la durée de direction du regard étendue est prédéfinie pour un dispositif afficheur (16) du véhicule automobile (10) réalisé en tant qu'affichage tête haute.

3. Procédé selon l'une quelconque des revendications précédentes,
**caractérisé en ce que**
la durée de direction du regard moyenne est prédéfinie pour un dispositif afficheur (18) agencé au-dessus d'une console médiane (38) du véhicule automobile (10).

4. Procédé selon l'une quelconque des revendications précédentes,
**caractérisé en ce que**
la durée de direction du regard prédéfinie est prédéfinie pour un dispositif afficheur (14) réalisé en tant qu'instrument combiné.

5. Procédé selon l'une quelconque des revendications précédentes,
**caractérisé en ce que**
les durées de direction du regard respectives sont modifiées en fonction d'une vitesse du véhicule automobile (10).

6. Système (12) pour faire fonctionner une pluralité de dispositifs afficheurs (14, 16, 18) d'un véhicule automobile (10), avec :
- un dispositif de détection du regard (20), lequel est conçu pour détecter une direction du regard (22) d'un conducteur (24) du véhicule automobile (10) et contrôler à partir de la direction du regard (22) détectée, si le conducteur (24) a dirigé son regard pendant au moins une durée de direction du regard prédéfinie sur une zone d'affichage (26, 28, 30) des dispositifs afficheurs (14, 16, 18) ;
- un dispositif de commande (32), lequel est conçu pour activer un mode interactif en cas de direction du regard constatée du conducteur (24) pendant au moins la durée de direction du regard prédéfinie sur une des zones d'affichage (26, 28, 30) d'un des dispositifs afficheurs (14, 16, 18), dans lequel un dispositif de service (34) du système (12) est activé pour la commande du dispositif afficheur (14, 16, 18) concerné ;
**caractérisé en ce que**
- le dispositif de commande (32) est conçu pour prédéfinir pour au moins un des dispositifs afficheurs (16), une durée de direction du regard étendue, laquelle est plus longue que la durée de direction du regard prédéfinie, dans lequel le dispositif de commande (32) est conçu pour prédéfinir la durée de direction du regard étendue seulement pour le dispositif afficheur (16), dont la zone d'affichage (28) est agencée entièrement au-dessus d'une arête inférieure (42) d'un pare-brise du véhicule automobile (10) ;
- le dispositif de commande (32) est conçu pour n'activer le mode interactif pour ce dispositif afficheur (16) que s'il a été détecté que le regard du conducteur (24) a été dirigé pendant au moins la durée de direction du regard étendue sur la zone d'affichage (28) de ce dispositif afficheur (16) ;
- le dispositif de commande (32) est conçu pour prédéfinir une durée de direction du regard moyenne, laquelle est plus longue que la durée de direction du regard prédéfinie et plus courte que la durée de direction du regard étendue, pour le dispositif afficheur (18), dont la zone d'affichage (30) n'est agencée que partiellement au-dessus d'une arête inférieure (42) d'un pare-brise du véhicule automobile (10).

7. Véhicule automobile (10) avec un système (12) selon la revendication 6.
